# EUROPÄISCHE PATENTSCHRIFT

(11) **EP 3 320 769 B1**
(45) Veröffentlichungstag und Bekanntmachung des Hinweises auf die Patenterteilung: **03.07.2019**
(21) Anmeldenummer: 17198782.9
(22) Anmeldetag: 27.10.2017
(51) Int. Cl.: A01F 15/08

(54) **RECHTECKBALLENPRESSE MIT EINER DIE STOPFERBEWEGUNG KOMPENSIERENDEN GEGENMASSE**
RECTANGULAR BALE PRESS WITH COUNTERWEIGHT WHICH COMPENSATES FOR THE MOVEMENT OF THE STAMP
PRESSE À BALLES RECTANGULAIRES POURVUE DE CONTREPOIDS DESTINÉ À COMPENSER LE MOUVEMENT DU BOURRAGE

(30) Priorität: 10.11.2016 DE 102016222081
(43) Veröffentlichungstag der Anmeldung: 16.05.2018
(60) Teilanmeldung: 19176390.3
(73) Patentinhaber: Deere & Company, Moline, IL 61265 (US)
(72) Erfinder: Gresch, Valentin, 68163 Mannheim (DE); Jung, Benedikt, 68163 Mannheim (DE); Waibel, Christian, 68163 Mannheim (DE)
(74) Vertreter: Holst, Sönke

(56) Entgegenhaltungen:
- EP-A1- 1 431 099
- EP-A1- 2 502 485
- EP-A2- 2 962 543
- DE-A1-102010 054 303
- US-A- 2 552 888

## Beschreibung

Die Erfindung betrifft eine Rechteckballenpresse nach dem Oberbegriff des Anspruchs 1.

### Stand der Technik

Landwirtschaftliche Zugfahrzeuge wie z.B. Ackerschlepper umfassen üblicherweise Antriebssysteme mit Antriebsmotoren, die nicht nur zum Vortrieb des Zugfahrzeugs dienen, sondern auch eine Last antreiben. Eine derartige Last kann insbesondere eine Einrichtung zur Aufnahme und/oder Bearbeitung von Erntegut sein. Diese Last kann vom eigentlichen Zugfahrzeug trennbar sein und durch eine Zapfwelle vom Antriebsmotor des Arbeitsmotors angetrieben werden, wie beim Beispiel einer Ballenpresse, die von einem Ackerschlepper gezogen wird. Die Last wird vom Antriebsmotor über einen Last-Antriebsstrang angetrieben, der (nur) mechanische oder (auch) hydraulische oder elektrische Kraftübertragungselemente enthält. Analog erfolgt der Vortrieb des Zugfahrzeugs durch den Antriebsmotor über einen Vortriebs-Antriebsstrang, der ebenfalls (nur) mechanische oder (auch) hydraulische oder elektrische Kraftübertragungselemente enthält. Der Antriebsmotor des Zugfahrzeugs kann ein Verbrennungsmotor oder ein Elektromotor sein.

Der Betrieb des Zugfahrzeugs bringt es mit sich, dass die Leistungsabnahme der Last nicht in allen Fällen konstant ist. Manche Lasten erfordern aufgrund ihres mechanischen Aufbaus zeitlich variable Antriebsleistungen, wie beispielsweise Rechteckballenpressen, bei denen ein Stopfer periodisch in eine Presskammer gedrückt wird, um das zu pressende Erntegut zu einem rechteckigen Ballen zusammen zu drücken. Die sich zeitlich ändernden Leistungsabnahmen der Last bedingen über den Last-Antriebsstrang Drehzahländerungen des Antriebsmotors, welche über den Vortriebs-Antriebsstrang auch zu sich ändernden Vortriebsgeschwindigkeiten des Zugfahrzeugs führen. Außerdem bewirkt der sich periodisch nach vorn und hinten bewegende Stopfer eine fortdauernde Massenverlagerung seitens der Rechteckballenpresse, die über die Deichsel und Kupplungselemente das Zugfahrzeug alternierend bremst und beschleunigt.

### Problem

Derartige Änderungen der Vortriebsgeschwindigkeit des Zugfahrzeugs sind unerwünscht, da sie den Bediener des Zugfahrzeugs Beschleunigungen nach vorn und hinten aussetzen. Neben der linearen Beschleunigung wird durch die zyklische Änderung der Fahrgeschwindigkeit insbesondere bei Ackerschleppern mit Vorderachsfederung auch eine Nickbewegung des Fahrzeugs hervorgerufen, die den Fahrkomfort verschlechtert. Auch werden die Komponenten des Vortriebs-Antriebsstrangs, die Reifen des Zugfahrzeugs und die Kopplungselemente zwischen dem Zugfahrzeug und einer davon gezogenen Last durch die ständigen Geschwindigkeitsänderungen stark belastet und verschleißen schnell.

Im Stand der Technik (EP 1 609 349 A1, EP 1 658 765 A1, EP 2 183 955 A1) gibt es Ansätze, die Motorleistung abhängig von der Belastung des Last-Antriebsstranges vorausschauend zu regeln, um die Leistung des Antriebsmotor des Zugfahrzeugs bei Laständerungen anzupassen, d.h. bei Lastspitzen zu vergrößern und bei Lastabnahme zu verringern. Auch wurde in der DE 10 2015 205 509 A1 vorgeschlagen, durch Bodenunebenheiten oder laständerungsbedingte Geschwindigkeitsänderungen bedingte Nickbewegungen eines Zugfahrzeugs durch gegenwirkende Geschwindigkeitsänderungen auszugleichen, während die nachveröffentlichte DE 10 2016 218 595 A1 vorschlägt, die Geschwindigkeit des Zugfahrzeugs basierend auf erkannten oder erwarteten Laständerungen durch Anpassung des Übersetzungsverhältnisses des Vortriebs-Antriebsstrangs zu regeln.

Allerdings stellt sich in der Praxis heraus, dass sich insbesondere die durch die periodische Bewegung des Stopfers einer Rechteckballenpresse nach vorn und hinten bedingte Geschwindigkeitsänderung des Zugfahrzeugs nicht komplett ausregeln lässt. Die durch den Stopfer induzierte Störung ist nämlich relativ groß und enthält, da sie zweimal je Presszyklus an beiden Umkehrpunkten des Stopfers auftritt, auch höherfrequente Komponenten, die sich durch Anpassungen der Antriebsmotordrehzahl und/oder des Antriebsstranges, deren obere Grenzfrequenz in der Größenordnung von 1 Hz liegt, nicht in befriedigender Weise durch Gegenregeln ausgleichen lassen. Auch die oben erwähnten Nickbewegungen lassen sich nicht in befriedigender Weise durch Getriebesteuerung bzw. Vorsteuerung des Verbrennungsmotors ausgleichen. Die Anpassung der Getriebeübersetzung lässt sich zwar so anpassen, dass die Nickbewegungen minimiert werden, jedoch lässt sich dann nicht gleichzeitig die Längsbeschleunigung minimieren.

Im Stand der Technik erfolgt der Antrieb des Stopfers einer Rechteckballenpresse über die Zapfwelle des Zugfahrzeugs und ein Getriebe, das den Stopfer über eine Kurbel und eine Pleuelstange antreibt. Die Zapfwelle treibt zudem noch eine relativ große Schwungmasse an. Es sind zwar auch an der Ausgangsseite des Getriebes noch gewisse Massen (z.B. in Form eines von der Getriebeausgangwelle angetriebenen, massiven Ringes, an dem auch ein Lagerauge für die Pleuelstange angegossen ist, vgl. WO 2014/099909 A1 und US 2 552 888 A) vorhanden, die sich mit der Kurbel mitbewegen, jedoch an der der Pleuelstange diametral gegenüber liegenden Seite der Kurbel angeordnet sind und sich demnach nach vorn bewegen, wenn sich der Stopfer nach hinten bewegt und umgekehrt und somit in gewissem Maße der durch den Stopfer bedingten, fortdauernden Massenverlagerung seitens der Rechteckballenpresse entgegenwirken, jedoch ist die Masse des Stopfers wesentlich größer als die gegenläufigen Massen, sodass sich das erwähnte Problem durch die erwähnten, gegenläufigen Massen nicht befriedigend lösen lässt.

Ein anderes Problem bei Rechteckballenpressen liegt darin, dass die Schwungmasse ein recht großes Trägheitsmoment aufweisen muss, um die beim Aufprall des Stopfers gegen das Erntegut benötigte Energie bereitzustellen, ohne den Last-Antriebsstrang allzu stark zu belasten. Dieses große Trägheitsmoment führt zu Anlaufschwierigkeiten nach den Schließen der Zapfwellenkupplung. Man verwendet daher separate Antriebe (z.B. DE 196 21 391 A1) zum Hochfahren der Schwungmasse, die jedoch relativ aufwändig sind. Schwungmassen mit variablem Trägheitsmoment, bei denen sich die Massen durch die Fliehkraft entgegen der Kraft einer Feder radial nach außen bewegen, was zu kleinen Trägheitsmomenten im Stand und beim Anlaufen und zu größeren Trägheitsmomenten bei höheren Drehgeschwindigkeiten führt, sind zwar an sich bekannt (JP S 61 151 823 A1, GB 2 242 353 A, DE 10 2010 054 303 A1), jedoch nicht im Kontext von Rechteckballenpressen.

Das der Erfindung zu Grunde liegende Problem wird darin gesehen, eine verbesserte Rechteckballenpresse bereitzustellen, welche die genannten Nachteile nicht oder in einem verminderten Maße aufweist.

### Lösung

Dieses Problem wird erfindungsgemäß durch die Lehre der Patentansprüche 1 und 6 gelöst, wobei in den weiteren Patentansprüchen Merkmale aufgeführt sind, die die Lösung in vorteilhafter Weise weiterentwickeln.

Eine Rechteckballenpresse umfasst ein über ein Feld bewegbares, tragendes Gestell, Erntegutaufnahmemittel zur Aufnahme von Erntegut vom Boden des Feldes, Fördermittel zum Fördern von durch die Erntegutaufnahmemittel aufgenommenem Erntegut, eine Presskammer für Erntegut, in welche alternierend ein Stopfer einführbar und wieder daraus herausziehbar ist, um das durch die Fördermittel in die Presskammer geförderte Erntegut zu einem Ballen zu verdichten, einen Antrieb zur Herstellung der Hin- und Herbewegung des Stopfers, und eine mit dem Antrieb gekoppelte, zur Bewegung des Stopfers gegenläufige Masse, die sich dann in eine erste Richtung bewegt, wenn sich der Stopfer in eine der ersten Richtung entgegengesetzte, zweite Richtung bewegt und umgekehrt. Die sich hin- und herbewegende Massen des Stopfers und seines Antriebs haben während des Betriebes aufgrund der Massenträgheit (drittes Newton'sches Axiom, *actio* = *reactio,* Impulserhaltungssatz) eine dazu konträre (gegenläufige) Bewegung des Gestells zur Folge, die durch die gegenläufige Masse gemindert wird. Die gegenläufige Masse ist derart konfiguriert, dass sie die besagte Bewegung des Gestells zumindest näherungsweise kompensiert.

Mit anderen Worten wird die gegenläufige Masse derart groß dimensioniert und so positioniert, dass sich bei der Hin- und Herbewegung des Stopfers und seines Antriebs zwei Massen, nämlich der Stopfer und sein Antrieb einerseits und die gegenläufige Masse andererseits in entgegen gesetzte Richtungen bewegen, deren Impulse (Produkt aus Masse und Geschwindigkeit) etwa gleich groß sind. Auf diese Weise erreicht man, dass die durch Massenträgheit des Stopfers bei seiner Hin- und Herbewegung auf das Gestell induzierte Bewegung näherungsweise verschwindet. Dadurch vermeidet man die eingangs erwähnten, nachteiligen Auswirkungen der Bewegung des Stopfers auf die Rechteckballenpresse und ein die Rechteckballenpresse ziehendes Zugfahrzeug oder im Falle einer selbstfahrenden Rechteckballenpresse eine Verminderung oder Vermeidung der durch den sich hin- und herbewegenden Stopfer auf die Rechteckballenpresse induzierten Bewegung. Die verbleibenden Störungen, welche trotz mechanischer Kompensation noch von der Rechteckballenpresse in das Zugfahrzeug eingetragen werden, haben somit nur noch eine deutlich geringere Amplitude und können deshalb durch regelungstechnische Methoden, welche zugfahrzeugseitig implementiert werden, mit geringerem Aufwand weiter reduziert werden.

Der Antrieb zur Herstellung einer Hin- und Herbewegung des Stopfers umfasst in an sich bekannter Weise ein Getriebe, eine vom Getriebe antreibbare Kurbel und eine die Kurbel antriebsmäßig mit dem Stopfer verbindende Pleuelstange. Bei einer derartigen Ausführungsform wird die gegenläufige Masse mit der Kurbel gekoppelt, um die gegenläufige Masse mit der Kurbel gemeinsam rotieren zu lassen.

Üblicherweise verläuft die Hin- und Herbewegung des Stopfers entlang der Vorwärtsrichtung der Rechteckballenpresse, obwohl sie bei einer anderen Ausführungsform auch quer dazu oder in vertikaler Richtung verlaufen könnte.

Insbesondere ist am Gestell eine mit einem Zugfahrzeug koppelbare Deichsel angebracht und der Antrieb durch eine mit dem Zugfahrzeug verbindbare Zapfwelle antreibbar.

Eine Schwungmasse des Antriebs kann ein variables Trägheitsmoment aufweisen. Die Schwungmasse hat beim Anfahren der Rechteckballenpresse ein kleines Trägheitsmoment, was den Einkuppel- und Hochdrehvorgang erleichtert. Ihr Trägheitsmoment steigt mit wachsender Drehzahl an, um den Antrieb des Stopfers zu stabilisieren.

Insbesondere umfasst die Schwungmasse eine mittige Welle und radial gegenüber der Welle entgegen einer Federkraft nach außen bewegliche Massen.

Bei einer Kombination aus einer beschriebenen Rechteckballenpresse und einem Zugfahrzeug kann letzteres mit einer Steuerung versehen werden, die programmiert ist, die Drehzahl eines Antriebsmotors und/oder die Vortriebsgeschwindigkeit des Zugfahrzeugs im Sinne der Einhaltung eines Sollwertes zu steuern oder zu regeln. Die beschriebene gegenläufige Masse und ggf. Schwungmasse erleichtern die exakte Ausregelung der geregelten Größen.

### Ausführungsbeispiel

In den Zeichnungen ist ein nachfolgend näher beschriebenes Ausführungsbeispiel der Erfindung dargestellt. Es zeigt:
- Fig. 1: eine seitliche Ansicht eines Zugfahrzeugs in Form eines Ackerschleppers mit einer angehängten Last in Form einer Rechteckballenpresse,
- Fig. 2: eine vergrößerte seitliche Ansicht des Antriebs der Rechteckballenpresse,
- Fig. 3a: eine Vorderansicht einer Schwungmasse des Antriebs der Rechteckballenpresse,
- Fig. 3b: einen Querschnitt durch die Schwungmasse der Figur 3a entlang der Linie A-A,
- Fig. 4: ein Schema des Antriebssystems des Zugfahrzeugs, und
- Fig. 5: ein Flussdiagramm, nach dem die Steuerung des Antriebssystems arbeitet.

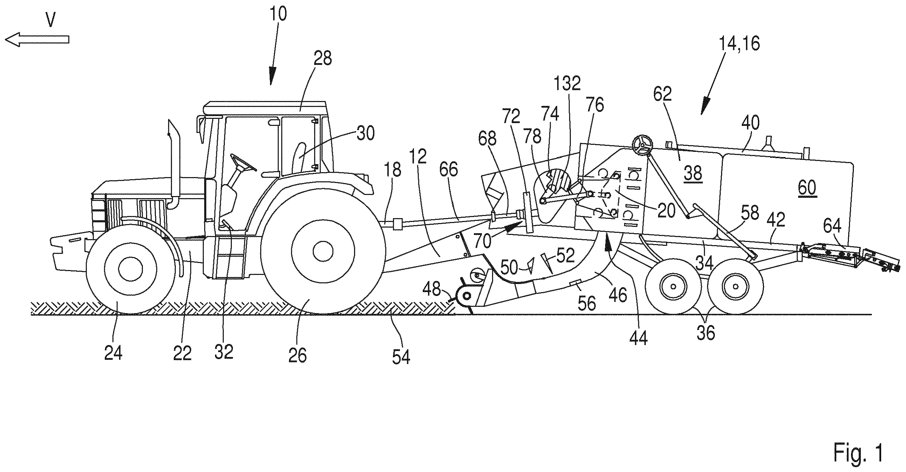

Die Figur 1 zeigt ein landwirtschaftliches Zugfahrzeug 10 in Form eines Ackerschleppers, der über eine Deichsel 12 eine Last 14 in Form einer Rechteckballenpresse 16 zieht. Eine Zapfwelle 18 dient zum Antrieb beweglicher Elemente der Last 14 und insbesondere eines Stopfers 20. Das Zugfahrzeug 10 baut sich auf einem Fahrgestell 22 auf, das sich auf lenkbaren Vorderrädern 24 und antreibbaren Hinterrädern 26 abstützt und eine Kabine 28 trägt, in der sich ein Bedienerarbeitsplatz 30 befindet. Mittels einer Eingabeeinrichtung 32 in Form eines Pedals oder eines Fahrhebels, der ohne dauerhafte Bedienerinteraktion eine Sollgeschwindigkeit vorgeben kann, kann in einer manuellen Betriebsart die Vortriebsgeschwindigkeit des Zugfahrzeugs 10 durch einen Bediener vorgegeben werden.

Die Rechteckballenpresse 16 dient zum Herstellen quaderförmiger Ballen. Die Rechteckballenpresse 16 weist ein rahmenartiges Gestell 34 auf, das auf Bodenstützrädern 36 in Tandemanordnung abgestützt ist. An das Gestell 34 ist die Deichsel 12 angeschlossen, welche sich von diesem aus nach vorn erstreckt und so ausgebildet ist, dass sie an das Zugfahrzeug 10 angeschlossen werden kann, der mit der Zapfwelle 18 ausgerüstet ist, um Leistung zum Antreiben verschiedener angetriebener Komponenten der Rechteckballenpresse 16 bereitzustellen. Eine Presskammer 38 von rechteckförmigem Querschnitt wird teilweise von einem Gehäuseoberteil 40 und einem Gehäuseunterteil 42 gebildet, wobei der Gehäuseunterteil 42 mit einem Guteinlass 44 versehen ist, an den ein gekrümmter Zufuhrkanal 46 angeschlossen ist. Die Seitenwände der Presskammer 38 und/oder das Gehäuseoberteil 40 können starr angebracht oder durch nicht gezeigte Aktoren verstellbar sein, so dass der Querschnitt der Presskammer 38 veränderbar ist. Über die Einstellung der Aktoren lässt sich der seitliche Anpressdruck auf den Ballenteil 62 und somit die Pressdichte variieren. Der seitliche Anpressdruck wirkt ebenfalls auf den schon gebundenen Ballen 60. Dadurch wird die Widerstandskraft, welche der Bewegung des Ballens 60 aus der Presskammer entgegenwirkt, erhöht und somit auch die Pressdichte des neuen Ballens 62 erhöht.

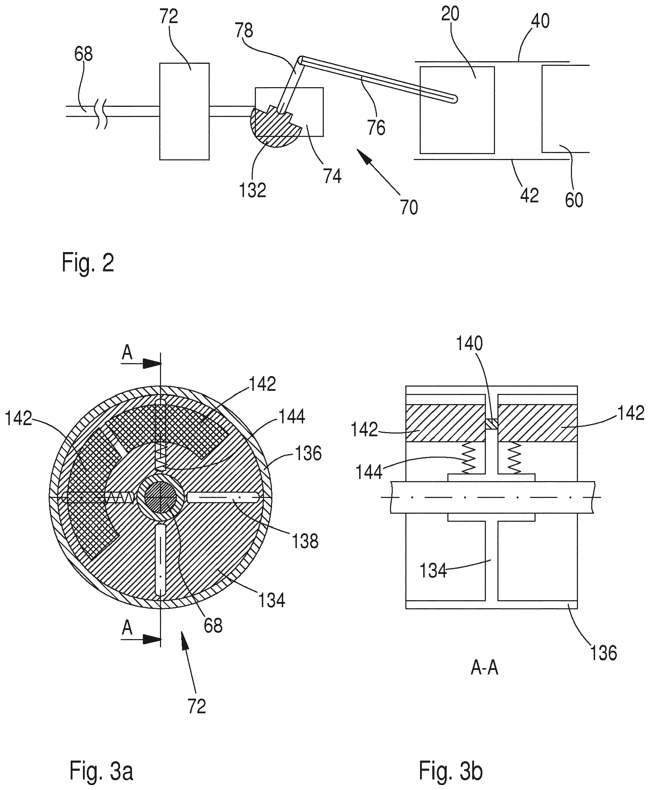

Eine Zufuhreinrichtung weist Erntegutaufnahmemittel 48 zur Aufnahme von Erntegut vom Boden des Feldes in Form eines Aufnehmers mit einem zugeordneten Niederhalter, sowie Erntegutfördermittel 50, 52 zum Fördern von durch die Erntegutaufnahmemittel aufgenommenem Erntegut in Form einer Verdichtergabel 50 und einer Ladegabel 52 auf. Die Erntegutaufnahmemittel 48 umfassen eine zur Mitte fördernde Schnecke und sind vor dem Zufuhrkanal 46 angeordnet, um ein Schwad 54 von Erntegut vom Boden aufzuheben und es an die Verdichtergabel 50 abzugeben, die dazu dient, Erntegut in dem Zufuhrkanal 46 zu verdichten, bis sich eine Ladung von vorgewählter Dichte in dem Zufuhrkanal 46 angesammelt hat und mittels der Ladegabel 52 über den Guteinlass 44 in die Presskammer 38 hineingestopft wird. An einer vorderen unteren Stelle des Zufuhrkanals 46 ist eine federbelastete Klappe 56 schwenkbar montiert, die in Abhängigkeit der Dichte des in dem Zufuhrkanal 46 befindlichen Erntegutes schwenkt und anzeigt, sobald eine gewünschte Pressgutdichte in dem Zufuhrkanal 46 erreicht ist, um über eine Kontrolleinheit 98 (vgl. Figur 2) die Bestromung eines elektrischen Steuerkreislaufs zu bewirken, der eine entsprechende Antriebsverbindung herstellt, die die Ladegabel 52 aktiviert, so dass sie die Ladung des Ernteguts in die Presskammer 38 bewegt. Eine elektrische Ansteuerung der Ladegabel 52 wird beispielsweise in US 2016/0088798 A1 beschrieben. Bei anderen, auf dem Markt verfügbaren Pressen geschieht die Auslösung der Ladegabel 52 mechanisch. Im Folgenden beziehen sich Richtungsangaben, wie vorn, hinten stets auf die Vorwärtsrichtung V des Zugfahrzeugs 10 und der Rechteckballenpresse 16, die in der Figur 1 von rechts nach links verläuft.

Wenn die Ladung des Ernteguts in die Presskammer 38 eingebracht wurde, wird der Stopfer 20 mittels eines geeigneten Antriebs 70 in einer gesteuerten Reihenfolge zeitlich nach der Ladegabel 52 betätigt, um das Erntegut nach hinten in die Presskammer 38 zu bewegen, wo es in einem Stapel verdichtet wird. Nachdem der Stapel von verdichtetem Material eine vorgewählte Länge erreicht hat, wird ein Nadelzusammenbau 58 zum Liefern von Bindegarn, der mehrere gekrümmte Nadeln enthält, betätigt, um mehrere Garnstränge einer entsprechenden Anzahl nicht gezeigter Knoter zuzuführen, die so wirken, dass sie Garnlängen um die vorgewählte Länge der Stapel legen, um einen Ballen 60 zu bilden, der zum Entladen fertig ist, was dann geschieht, wenn er von einem noch nicht fertigen Ballenteil 62 aus dem rückwärtigen Endbereich der Presskammer 38 herausgedrückt wird, wenn er in seiner Länge zunimmt, weil neue Ladungen von Erntegut in die Presskammer 38 gestopft werden.

Der Stopfer 20 ist für eine hin- und hergehende Bewegung in die Presskammer 38 zwischen einer zurückgezogenen Stellung vor dem Guteinlass 44 und einer (in Figur 1 gezeigten) teilwiese ausgefahrenen Stellung über dem Guteinlass 44 ausgelegt, aus der er sich noch weiter nach hinten bewegen kann, bis er gegen einen Ballenteil 62 stößt. Diese Bewegung des Stopfers 20 hat zum Ergebnis, dass Ladungen von Erntegut, die aus dem Zufuhrkanal 46 in die Presskammer 38 eingeführt werden, gegen einen Stapel von Erntegut verdichtet werden, was den teilweise gebildeten Ballenteil 62 und/oder den kompletten Ballen 60 einschließt. Zum schonenden Ablegen des Ballens 60 auf dem Erdboden ist am hinteren Ende des Gestells 34 als rückwärtige Verlängerung des Gehäuseunterteils 42 eine Ablagevorrichtung 64 angebracht.

Der Antrieb des Stopfers 20 erfolgt über die Zapfwelle 18 des Zugfahrzeugs 10, die über eine Gelenkwelle 66 eine Eingangswelle 68 eines Antriebs 70 des Stopfers 20 antreibt. Die Eingangswelle 68 treibt ein Schwungrad 72 und über ein Getriebe 74 eine Kurbel 78 an, deren Bewegung über eine Pleuelstange 76 auf den Stopfer 20 übertragen wird. Diese Elemente bilden den Antrieb 70 des Stopfers 20.

Mit der Kurbel 78 ist eine gegenläufige Masse 132 verbunden, die der Kurbel 78 diametral gegenüber liegt und starr mit der Kurbel 78 verbunden ist. Wenn sich der Stopfer 20 nach vorn bewegt, bewegt sich die gegenläufige Masse 132 demnach nach hinten und umgekehrt. Die gegenläufige Masse 132 ist derart dimensioniert, dass sich das Produkt aus der Masse der gegenläufigen Masse 132 (in kg messbar) und ihrer horizontalen Geschwindigkeitskomponente gleich dem Produkt aus der horizontalen Geschwindigkeitskomponente der Massen des Stopfers 20 und seines Antriebs 70 (d.h. der Kurbel 78 und der Pleuelstange 76), jedoch entgegen gerichtet ist. Diese Bedingung trifft insbesondere für den vorderen und hinteren Umkehrpunkt des Stopfers 20 zu, denn dort sind die Beschleunigung und somit die wirkenden Massenträgheitskräfte am größten. Man erreicht dadurch, dass die bei bisherigen Rechteckballenpressen auf das Gestell 34 der Rechteckballenpresse 16 durch die sich hin- und herbewegende Masse des Stopfers 20 induzierte Bewegung zumindest näherungsweise kompensiert (ausgelöscht) wird. Dadurch ergibt sich auch ein ruhigerer Lauf des Zugfahrzeugs 10 und die Belastung der Deichsel 12 und der diese mit den Zugfahrzeugs 10 verbindenden Kupplungselemente wird vergleichmäßigt.

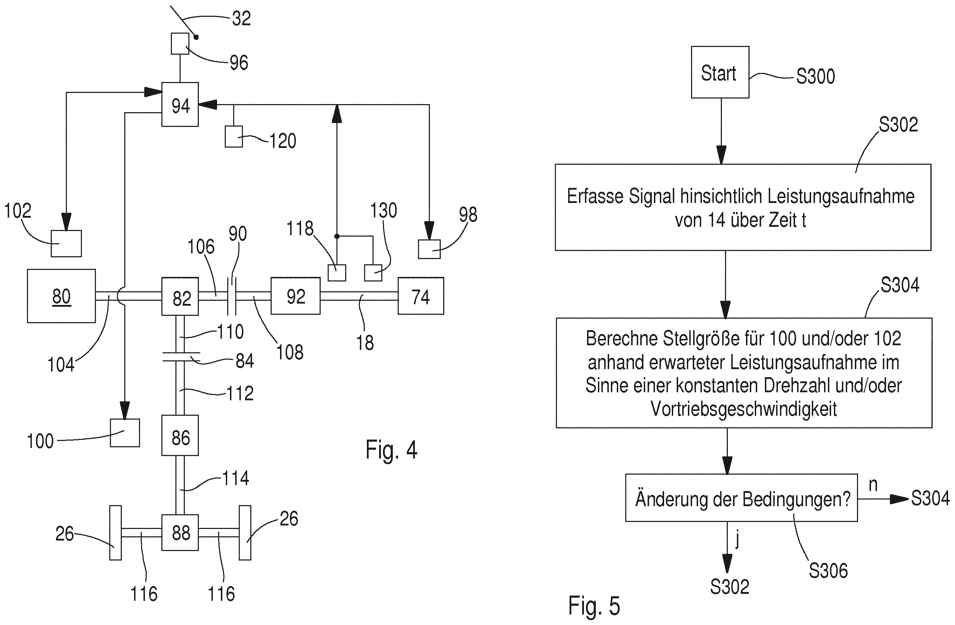

Um ein hinreichend großes Trägheitsmoment der Schwungmasse 72 zu ermöglichen, besitzt diese ein variables Trägheitsmoment, wozu auf die Figuren 3a und 3b verwiesen wird. An der Eingangswelle 68 ist eine sich radial erstreckende Stützplatte 134 befestigt, die mit einem äußeren Ring 136 verbunden ist. Die Stützplatte 134 umfasst vier Schlitze 138, durch welche sich Verbindungsstege 140 erstrecken, die zwei Rotationsmassen 142 verbinden. Die Rotationsmassen 142 werden durch Zugfedern 144 nach innen gezogen. Anders als in den Figuren 3a und 3b gezeigt, sind Rotationsmassen 142 gleichförmig um die Eingangswelle 68 verteilt, um eine ungleichförmige Bewegung der Schwungmasse 72 zu vermeiden. Wenn die Schwungmasse 72 steht oder nur langsam dreht, werden die Rotationsmassen 142 durch die Zugfedern 144 nach innen, zur Eingangswelle 68 hin gezogen. Das Trägheitsmoment der Schwungmasse 72 ist dann relativ klein, was ein Anlaufen der Rotationsbewegung der Schwungmasse 72 nach dem Schließen einer Kupplung 90 (vgl. Figur 4) erleichtert. Mit zunehmender Drehzahl bewegen sich die Rotationsmassen 142 aufgrund der wirkenden Fliehkräfte gegen die Kräfte der Zugfedern 144 nach außen, was das Trägheitsmoment und die Rotationsenergie der Schwungmasse 72 vergrößert. Die Federn 144 sind vorzugsweise so ausgelegt, dass die Massen ab einer Drehzahl von ca. 80% der Solldrehzahl an dem als äußere Begrenzung dienenden Ring 136 anstehen. Dies stellt sicher, dass auch bei einer gewissen Schwankung der Drehzahl des Antriebstranges die Trägheit der Schwungmasse 72 konstant bleibt. Anstelle von Zugfedern 144 oder zusätzlich dazu könnte man auch Druckfedern verwenden, die zwischen dem Ring 136 und den Rotationsmassen 142 angeordnet werden.

Die Figur 4 zeigt ein Schema des Antriebssystems des Zugfahrzeugs 10 und der Last 14. Ein Antriebsmotor 80 des Zugfahrzeugs 10, der als Verbrennungs- (Diesel-) Motor oder als Elektromotor ausgeführt sein kann, treibt mit seiner Ausgangswelle 104 ein Verteilergetriebe 82 an, das eine erste Vortriebsausgangswelle 110 und eine Lastausgangswelle 106 hat. Bei einer der Wellen 110 oder 106 kann das Verteilergetriebe 82 eine direkte Verbindung zur Ausgangswelle 104 beinhalten. Die Vortriebsausgangswelle 110 treibt über eine Fahrkupplung 84 eine Getriebeeingangswelle 112 an, die ein (z.B. als Lastschaltgetriebe oder stufenlos verstellbares Getriebe ausgeführtes) Vortriebsgetriebe 86 mit veränderbarer Übersetzung antreibt, das ausgangsseitig über eine Welle 114, ein Differentialgetriebe 88 und Radantriebswellen 116 die hinteren Räder 26 antreibt. Optional kann das Vortriebsgetriebe 86 auch die Vorderräder 24 über nicht gezeigte Antriebsmittel antreiben. Die Lastausgangswelle 106 steht über eine Zapfwellenkupplung 90 und ein Zapfwellengetriebe 92 mit der Zapfwelle 18 in Antriebsverbindung, die zum Antrieb der des Getriebes 74 des Antriebs 70 und weiterer angetriebener Elemente der Last 14 dient.

Das Verteilergetriebe 82, die Vortriebsausgangswelle 110, die Kupplung 84, das Vortriebsgetriebe 86, die Welle 114, das Differentialgetriebe 88 und die Radantriebswellen 116 bilden einen vom Antriebsmotor 80 antreibbaren Vortriebs-Antriebsstrang zum Antrieb von Vortriebsmitteln (Räder 26) des Zugfahrzeugs 10, der eine mittels des Aktors 100 veränderbare Übersetzung aufweist. Das Verteilergetriebe 82, die Lastausgangswelle 106, die Kupplung 90, das Zapfwellengetriebe 92, die Zapfwelle 18 und das Getriebe 74 (mit den nachfolgenden Komponenten zum Antrieb des Stopfers 20) bilden einen vom Antriebsmotor 80 antreibbaren Last-Antriebsstrang zum Antrieb der Last 14, die, wie im Folgenden beschrieben, eine zeitlich variable, zu einer Drehzahländerung des Antriebsmotors 80 führenden Leistungsabnahme bedingt.

Eine elektronische Steuerung 94 ist mit einer Kontrolleinheit 98 der Last 14 (Rundballenpresse 16), einem Aktor 100 zur Verstellung des Übersetzungsverhältnisses des Vortriebsgetriebes 86, einer Motorsteuerung 102, einem Geschwindigkeitsvorgabesensor 96 zur Erfassung der Stellung der Eingabeeinrichtung 32 und aus Gründen der Übersichtlichkeit nicht eingezeichneten Aktoren zum Schließen und Öffnen der Kupplungen 84 und 90 verbunden, obwohl letztere auch durch den Bediener per Hand oder Fuß betätigt werden könnten.

Der Stopfer 20 der Last 14 wird, wie oben beschrieben, periodisch in die Presskammer 38 gefahren und drückt gegen den Ballenteil 62, mit einer in einer Größenordnung von 1 Hz liegenden Frequenz. Da hierfür eine relativ hohe Leistung erforderlich ist, pflanzt sich diese Belastung über den Last-Antriebsstrang bis zum Antriebsmotor 80 fort, der mit Drehzahländerungen reagiert. Diese Drehzahländerungen führen über den Vortriebs-Antriebsstrang auch zu Vortriebsgeschwindigkeitsänderungen des Zugfahrzeugs 10, die sich für den Bediener nachteilig bemerkbar machen. Zudem bewirkt die Bewegung der Masse des Stopfers 20 durch Inertialkräfte auch eine periodische Beschleunigung und Verzögerung der ganzen Rechteckballenpresse 16, die sich auf das Zugfahrzeug 10 fortpflanzt. In beiden Fällen erfährt der Fahrer des Zugfahrzeugs 10 diesen Effekt sowohl akustisch als auch in Form von Längsbeschleunigungen und durch die Elastizität der Reifen der Räder 24, 26 und ggf. eine Vorderachsfederung bedingte Nickbewegungen des Zugfahrzeugs 10 am Bedienerarbeitsplatz 30.

Es gibt zwar aus Gründen der Fahrsicherheit und des Fahrkomforts eine Reihe von Federungssystemen, die auf das Zugfahrzeug 10 bzw. auf den Fahrer einwirkende Schwingungsbelastungen reduzieren sollen. Die meisten dieser Federungssysteme wirken passiv- oder semi-aktiv und tilgen die Vertikaldynamik des Fahrers. Es gibt aber auch aktive Systeme und Federungssysteme, die auf andere Freiheitsgrade wie Nicken, Rollen oder Gieren einwirken bzw. die Quer- und Längsdynamik adressieren. Derartige Systeme sind jedoch relativ aufwändig und können die Bewegung nicht ganz auslöschen.

Die Lebensdauer des Zugfahrzeugs 10 und ihrer Komponenten ist bei zyklischen Lastspitzen der Längsdynamik in Mitleidenschaft gezogen. Die Anhängerzugöse zur Anbringung der Deichsel 12 am Fahrgestell 22 geht bei spielbehafteten Verbindungseinrichtungen durch solche zyklischen Lasten oft von Endlage zu Endlage. In Folge dessen steigt die Amplitude der zyklischen Kraft jedes Mal signifikant an, was sich sowohl auf den Verschleiß und die Dauerfestigkeit der Verbindungseinrichtung, als auch auf den Komfort des Fahrers auswirkt. Dieser Effekt gilt selbstverständlich auch für alle anderen zyklisch beanspruchten Bauteile im kompletten Vortriebs-Antriebsstrang inklusive der Reifen. Aus Sicht des Fahrers und des Zugfahrzeugs 10 und der Last 14 ist es somit von hohem Interesse, die Amplituden der Längsdynamik und die Nickbewegungen zu reduzieren, insbesondere bei zyklisch wiederkehrenden Lasten. Es ist somit wünschenswert, dass das Zugfahrzeug 10 eine regelmäßig wiederkehrende äußere Last - verursacht durch Inertialkräfte oder durch das induzierte Drehmoment - automatisch erkennen und resultierende periodische Längsbeschleunigungen und/oder Nickbewegungen zumindest teilweise beseitigen kann.

Die Figur 5 zeigt ein Flussdiagramm, nach dem die Steuerung 94 im Betrieb vorgeht. Nach dem Start im Schritt S300 und Auswahl einer Automatikbetriebsart durch den Bediener mittels einer entsprechenden Eingabe in eine nicht gezeigte Bedienerschnittstelle wird das Zugfahrzeug 10 im Schritt S302 mit der Last 14 (Rechteckballenpresse 16) über ein Feld gefahren und dabei Erntegut aufgenommen und zu Ballen 60 gepresst. Die Vortriebsgeschwindigkeit des Zugfahrzeugs 10 wird dabei zunächst durch die Eingabeeinrichtung 32 vorgegeben, deren Stellung durch den Geschwindigkeitsvorgabesensor 96 erfasst und der Steuerung 94 zugeführt wird. Die Steuerung 94 kommandiert die Motorsteuerung 102 und den Aktor 100 in an sich bekannter Weise, d.h. die Drehzahl des Antriebsmotors 80 wird auf einen Wert gebracht, der zu einer geeigneten Drehzahl der Zapfwelle 18 führt und der Aktor 100 wird in eine Stellung gebracht, bei der die gewünschte Vortriebsgeschwindigkeit erzielt wird. Sollte das Zapfwellengetriebe 92 eine mittels eines Aktors veränderbare Übersetzung aufweisen, kann die Steuerung 94 auch den zugehörigen Aktor des Zapfwellengetriebes 92 kontrollieren, was einen weiteren Freiheitsgrad ermöglicht, um die Drehzahl des Antriebsmotors 80 auf einen verbrauchsgünstigen Wert zu stellen.

Die Leistungsaufnahme der Last 14 kann im Schritt S302 anhand eines Drehmomentsensors 118 (und/oder anhand eines die Presskraft des Stopfers 20 messenden Kraftmessbolzens) erfasst werden, der das von der Zapfwelle 18 übertragene Drehmoment erfasst. Es wäre auch denkbar, die (auf die abgenommene Leistung hinweisende) Drehzahl des Antriebsmotors 80 zu erfassen, die der Steuerung 94 durch die Motorsteuerung 102 übermittelt werden kann. Es können auch beide Vorgehensweisen kombiniert oder auf eine andere im Stand der Technik bekannte Methode zur Ermittlung der Last des Antriebsmotors 80 zurückgegriffen werden. Die Steuerung 94 zeichnet während des Schritts S302 das gemessene Drehmoment über die Zeit für eine Zeitspanne t auf, die in der Größenordnung von 10 Sekunden liegen kann. Der Aufzeichnungszeitraum wird derart gewählt, dass mehrere Perioden der Lastschwankungen enthalten sind.

Anhand dieser Aufzeichnung ist die Steuerung 94 anschließend im Schritt S304 in der Lage, abzuschätzen, welche Leistung die Last 14 in der Zukunft in Abhängigkeit von der Zeit abnehmen wird. Hierzu sei auf die Offenbarung der EP 2 183 955 A1 verwiesen, die durch Verweis mit in die vorliegenden Unterlagen aufgenommen wird, wobei der Einfluss der aufgenommenen Erntegutmengen in die Rechteckballenpresse 16 berücksichtigt oder nicht berücksichtigt werden kann. Um die unerwünschten Längsbeschleunigungen und/oder Nickbewegungen des Zugfahrzeugs 10 zu reduzieren oder ganz zu vermeiden, kontrolliert die Steuerung 94 den Aktor 100 im Schritt S304 derart, dass das Übersetzungsverhältnis des Vortriebsgetriebes 86 derart verstellt wird, dass die laständerungsbedingten Längsbeschleunigungen und/oder Nickbewegungen des Zugfahrzeugs 10 möglichst genau ausgeglichen werden. Das Übersetzungsverhältnis des Vortriebsgetriebes 86 wird demnach rechtzeitig erhöht, um das Zugfahrzeug 10 zu beschleunigen, wenn die von der Last 14 abgenommene Leistung ansteigt und analog wird das Übersetzungsverhältnis des Vortriebsgetriebes 86 rechtzeitig verkleinert, um das Zugfahrzeug 10 zu verzögern, wenn die von der Last 14 abgenommene Leistung absinkt. Somit bleibt die Vortriebsgeschwindigkeit des Zugfahrzeugs 10 über die Zeit konstant, trotz der zyklischen Änderungen in der durch die Last abgenommenen Leistung.

Das Kompensieren und Konstanthalten der Vortriebsgeschwindigkeitsänderung des Zugfahrzeugs 10 erfolgt somit nicht durch eine auf Messung der aktuellen Geschwindigkeit beruhenden Regelschleife (wie sie an sich beispielsweise aus der EP 1 350 658 A1 bekannt ist), welche die Übersetzung des Vortriebsgetriebes 86 verstellt, um bei Lastschwankungen die Vortriebsgeschwindigkeit des Zugfahrzeugs 10 konstant zu halten. Eine derartige Regelschleife könnte dynamische Wechselwirkungen mit einer Regelschleife zur Konstanthaltung der Drehzahl des Antriebsmotors 80 hervorrufen und ihre Stabilität wäre schwierig herstellbar. Anstelle dieser geschlossenen Regelschleife wird eine offene Regelschleife verwendet mit der erwarteten Leistungsabnahme der Last 14 oder einem davon abhängigen Signal als Eingangsgröße, um die durch die sich ändernden Leistungsabnahme resultierenden Geschwindigkeitsänderungen vorausschauend zu kompensieren.

Die Steuerung 94 kann die Motorsteuerung 102 im Schritt S304 derart kommandieren, dass sie die Drehzahl des Antriebsmotors 80 mittels einer auf der erfassten Drehzahl basierenden Regelschleife konstant hält (d.h. keine vorausschauende Kompensation der Motordrehzahl mittels offener Schleife zur Belastungserfassung vornehmen, wie sie in EP 2 183 955 A1 vorgesehen ist) oder (alternativ oder zusätzlich zu der beschriebenen Vortriebsgeschwindigkeitskontrolle) analog zur EP 2 183 955 A1 eine vorausschauende, zumindest teilweise lastkompensierende Regelung der Drehzahl des Antriebsmotors 80 mit offener Regelschleife vornehmen.

Es folgt der Schritt S306, in dem abgefragt wird, ob eine Änderung der äußeren Bedingungen stattgefunden hat, wie eine Änderung der Dichte des Schwads 54 oder dessen Feuchtigkeit. Diese Änderung kann daran erkannt werden, dass die Regelung des Schritts S304 nicht mehr optimal funktioniert, was durch einen geeigneten Trägheitssensor 120 des Zugfahrzeugs 10 erfasst werden kann. Haben sich die Bedingungen nicht geändert, folgt wieder der Schritt S304 und sonst der Schritt S302. Die automatische Regelung des Schritts 304 kann durch eine Bedienereingabe abgebrochen werden, z.B. durch manuelle Geschwindigkeitseingabe mittels der Eingabeeinrichtung 32.

Nach alledem ist offensichtlich, dass durch die gegenläufige Masse 132 die Funktion der Rechteckballenpresse 16 verbessert wird, denn durch die mechanische Kompensation der Auswirkung der Bewegung des Stopfers 20 durch die gegenläufige Masse 132 werden Vibrationen der Rechteckballenpresse 16 wesentlich vermindert, was auch die Regelung der Vortriebsgeschwindigkeit des Zugfahrzeugs 10 und/oder der Drehzahl des Antriebsmotors 80 durch die Steuerung 94 verbessert, denn die bei bisherigen Rechteckballenpressen 16 auf das Zugfahrzeug 10 übertragenen, durch den Stopfer 20 bedingten, periodischen Störungen entfallen weitgehend. Die beschriebene Schwungmasse 72 erleichtert das Hochfahren des Antriebs der Rechteckballenpresse 16.

## Patentansprüche

1. Rechteckballenpresse (18), umfassend:
ein über ein Feld bewegbares, tragendes Gestell (34),
Erntegutaufnahmemittel (48) zur Aufnahme von Erntegut vom Boden des Feldes,
Fördermittel (50, 52) zum Fördern von durch die Erntegutaufnahmemittel aufgenommenem Erntegut,
eine Presskammer (38) für Erntegut, in welche ein Stopfer (20) einführbar ist, um das durch die Fördermittel (50, 52) in die Presskammer (38) geförderte Erntegut zu einem Ballen (60) zu verdichten,
einen Antrieb (70) zur Herstellung einer Hin- und Herbewegung des Stopfers (20), der ein Getriebe (74), eine vom Getriebe antreibbare Kurbel (78) und eine die Kurbel (78) antriebsmäßig mit dem Stopfer (20) verbindende Pleuelstange (76) umfasst,
und eine mit dem Antrieb (70) gekoppelte, zur Bewegung des Stopfers (20) gegenläufige Masse (132), die starr mit der Kurbel (78) verbunden ist, der Kurbel (78) diametral gegenüber liegt und mit ihr rotiert,
wobei die sich hin- und herbewegende Masse des Stopfers (20) und seines Antriebs (70) während des Betriebes aufgrund der Massenträgheit eine dazu konträre Bewegung des Gestells (34) zur Folge hat, die durch die gegenläufige Masse (132) gemindert wird,
**dadurch gekennzeichnet, dass** die gegenläufige Masse (132) derart groß dimensioniert und positioniert ist, dass das Produkt aus Masse und Geschwindigkeit des Stopfers (20) und der Kurbel (78) und der Pleuelstange (76) einerseits und der gegenläufigen Masse (132) andererseits entgegengesetzt und gleich groß sind, sodass die gegenläufige Masse (132) die besagte Bewegung des Gestells (34) zumindest näherungsweise kompensiert.

2. Rechteckballenpresse (18) nach Anspruch 1, wobei die Hin- und Herbewegung des Stopfers (20) entlang der Vorwärtsrichtung (V) der Rechteckballenpresse (18) verläuft.

3. Rechteckballenpresse (18) nach einem der vorhergehenden Ansprüche, wobei am Gestell (34) eine mit einem Zugfahrzeug (10) koppelbare Deichsel (12) angebracht ist und der Antrieb (70) durch eine mit dem Zugfahrzeug (10) verbindbare Zapfwelle (18) antreibbar ist.

4. Rechteckballenpresse (18) nach einem der vorherigen Ansprüche, wobei eine Schwungmasse (72) des Antriebs (70) ein variables Trägheitsmoment aufweist.

5. Rechteckballenpresse (18) nach Anspruch 4, wobei die Schwungmasse (72) eine mittige Welle (68) und radial gegenüber der Welle (68) entgegen einer Federkraft nach außen bewegliche Rotationsmassen (142) umfasst.

6. Kombination aus einem Zugfahrzeug (10) und einer Rechteckballenpresse (18) nach einem der Ansprüche 1 bis 5.

7. Kombination nach Anspruch 6, wobei das Zugfahrzeug (10) mit einer Steuerung (94) versehen ist, die programmiert ist, die Drehzahl eines Antriebsmotors (80) und/oder die Vortriebsgeschwindigkeit des Zugfahrzeugs (10) im Sinne der Einhaltung eines Sollwertes zu steuern oder zu regeln.

## Claims

1. Rectangular baler (18), comprising:
a supporting frame (34) which is movable over a field,
a crop pick-up means (48) for picking up crop from the ground of the field,
conveying means (50, 52) for conveying crop picked up by the crop pick-up means,
a baling chamber (38) for crop, into which a stuffer (20) can be introduced in order to compress the crop conveyed by the conveying means (50, 52) into the baling chamber (38) to form a bale (60),
a drive (70) for producing a movement to and fro of the stuffer (20), the drive comprising a gearing (74), a crank (78) drivable by the gearing, and a connecting rod (76) connecting the crank (78) in terms of drive to the stuffer (20),
and a mass (132) which is coupled to the drive (70), is opposed to the movement of the stuffer (20) and is rigidly connected to the crank (78) lies diametrically opposite the crank (78) and rotates with the latter,
wherein the to-and-fro-moving mass of the stuffer (20) and of the drive (70) thereof during the operation results, due to the mass inertia, in a contrary movement of the frame (34), said movement being reduced by the opposed mass (132),
**characterized in that** the opposed mass (132) is of large dimensions and is positioned in such a manner that the product of mass and speed of the stuffer (20) and of the crank (78) and of the connecting rod (76), on the one hand, and of the opposed mass (132), on the other hand, are opposing and of an identical size, and therefore the opposed mass (132) at least approximately compensates for said movement of the frame (34).

2. Rectangular baler (18) according to Claim 1, wherein the movement to and fro of the stuffer (20) runs in the forwards direction (V) of the rectangular baler (18) .

3. Rectangular baler (18) according to either of the preceding claims, wherein a draw bar (12) which can be coupled to a tractor (10) is attached to the frame (34), and the drive (70) can be driven by a power-take-off shaft (18) which is connectable to the tractor (10).

4. Rectangular baler (18) according to one of the preceding claims, wherein an oscillating mass (72) of the drive (70) has a variable moment of inertia.

5. Rectangular baler (18) according to Claim 4, wherein the oscillating mass (72) comprises a central shaft (68) and rotational masses (142) which are movable outwards radially in relation to the shaft (68) counter to a spring force.

6. Combination of a tractor (10) and a rectangular baler (18) according to one of Claims 1 to 5.

7. Combination according to Claim 6, wherein the tractor (10) is provided with a controller (94) which is programmed to control or to regulate the rotational speed of an engine (80) and/or the advancing speed of the tractor (10), with the effect of maintaining a desired value.

## Revendications

1. Presse à balles rectangulaires (18), comportant :
un bâti (34) déplaçable sur un champ,
des moyens de réception de produit de récolte (48) servant à recevoir un produit de récolte à partir du sol du champ,
des moyens de convoyage (50, 52) servant à convoyer le produit de récolte reçu par les moyens de réception de produit de récolte,
une chambre de pressage (38) pour le produit de récolte, chambre dans laquelle un dispositif de bourrage (20) peut être introduit, afin de compacter le produit de récolte convoyé dans la chambre de pressage (38) par les moyens de convoyage (50, 52) pour former une balle (60),
un entraînement (70) servant à produire un déplacement de va-et-vient du dispositif de bourrage (20), lequel entraînement comporte une transmission (74), une manivelle (78) pouvant être entraînée par la transmission et une bielle (76) reliant par entraînement la manivelle (78) au dispositif de bourrage (20),
et un contrepoids (132) accouplé à l'entraînement (70) et mobile en sens inverse au déplacement du dispositif de bourrage (20), lequel contrepoids est relié rigidement à la manivelle (78), est diamétralement opposé à la manivelle (78) et tourne avec celle-ci,
la masse, animée d'un déplacement de va-et-vient, du dispositif de bourrage (20) et de son entraînement (70) ayant pour conséquence, pendant le fonctionnement, en raison de l'inertie de masse, un déplacement du bâti (34) en sens contraire, lequel déplacement est réduit par le contrepoids (132),
**caractérisée en ce que** le contrepoids (132) est dimensionné et positionné de telle sorte que le produit de la masse et de la vitesse du dispositif de bourrage (20) et de la manivelle (78) et de la bielle (76) d'une part et du contrepoids (132) d'autre part soient égaux et de sens inverses, de telle sorte que le contrepoids (132) compense au moins approximativement ledit déplacement du bâti (34).

2. Presse à balles rectangulaires (18) selon la revendication 1, dans laquelle le déplacement de va-et-vient du dispositif de bourrage (20) s'étend le long de la direction d'avance (V) de la presse à balles rectangulaires (18).

3. Presse à balles rectangulaires (18) selon l'une des revendications précédentes, dans laquelle une barre d'attelage (12) pouvant être accouplée à un véhicule tracteur (10) est montée sur le bâti (34) et l'entraînement (70) peut être entraîné au moyen d'un arbre de prise de force (18) pouvant être relié au véhicule tracteur (10).

4. Presse à balles rectangulaires (18) selon l'une des revendications précédentes, dans laquelle une masse d'inertie (72) de l'entraînement (70) présente un moment d'inertie variable.

5. Presse à balles rectangulaires (18) selon la revendication 4, dans laquelle la masse d'inertie (72) comporte un arbre central (68) et des masses rotationnelles (142) mobiles vers l'extérieur radialement par rapport à l'arbre (68) à l'encontre d'une force élastique.

6. Combinaison d'un véhicule tracteur (10) et d'une presse à balles rectangulaires (18) selon l'une des revendications 1 à 5.

7. Combinaison selon la revendication 6, dans laquelle le véhicule tracteur (10) est doté d'une commande (94) qui est programmée pour commander ou réguler le régime d'un moteur d'entraînement (80) et/ou la vitesse d'avance du véhicule tracteur (10) au sens de la conformité à une valeur de consigne.
